# EUROPEAN PATENT APPLICATION

(11) **EP 2 403 197 A2**
(43) Date of publication of application: **04.01.2012**
(21) Application number: 11156191.6
(22) Date of filing: 28.02.2011
(51) Int. Cl.: H04L 25/02

(54) **Power supply circuit**

(30) Priority: 30.06.2010 JP 2010150032
(71) Applicant: Kabushiki Kaisha Toshiba, Tokyo 105-8001 (JP)
(72) Inventor: Doi, Takashi, Tokyo 105-8001 (JP); Mawatari, Masahiko, Tokyo 105-8001 (JP); Kato, Akiyoshi, Tokyo 105-8001 (JP); Taira, Kazuhiko, Tokyo 105-8001 (JP)
(74) Representative: Henkel, Breuer & Partner

(57) **Abstract**

According to one embodiment, a power supply circuit includes a source (10), a sink (20), and a connection unit. A first control circuit (CTR1) of the source (10) is configured to send an inquiry about the presence/absence of a power supply function to a second control circuit (CTR2) of the sink (20) using a first line, to turn on a changeover switch (SWC) and turn off a power reception notification switch (SWD) when a response indicating the presence of the power supply function is received, and to send a power supply request to the second control circuit (CTR2) using the first line, and the second control circuit (CTR2) is configured to turn on a power supply switch (SWA) and turn off a power source direction notification switch (SWB) when the power supply request is received from the first control circuit (CTRI), and to continue power supply during a first level period of a potential of the second line.

## Description

Embodiments described herein relate generally to a power supply circuit.

In recent years, as communication interfaces used to transmit signals between devices, a High-Definition Multimedia Interface (HDMI) cable, Inter-Integrated Circuit (I²C) communication cable, and the like have been proposed.

Conventionally, a transmitting device (source device) can supply a maximum of 55 mA to a PW+5V line that supplies a power source voltage in, for example, an HDMI cable. Since 5 mA are consumed to drive an HPD line, a receiving device (sink device) can consume a maximum of 50 mA.

A general architecture that implements the various features of the embodiments will now be described with reference to the drawings. The drawings and the associated descriptions are provided to illustrate the embodiments and not to limit the scope of the invention.
FIG. 1 is a schematic circuit diagram showing an arrangement example of a power supply circuit according to an embodiment;
FIG. 2 is a timing chart for explaining an example of the operation of the power supply circuit shown in FIG. 1;
FIG. 3 is a timing chart for explaining another example of the operation of the power supply circuit shown in FIG. 1; and
FIG. 4 is a chart for explaining an example of a power supply cancel operation in the power supply circuit shown in FIG. 1.

Various embodiments will be described hereinafter with reference to the accompanying drawings.

In general, according to one embodiment, a power supply circuit includes a transmitting unit, a receiving unit, and a connection unit which comprises a first line configured to transmit a control signal between the transmitting unit and the receiving unit, a power source line configured to transmit a power source voltage, and a second line configured to transmit a power reception status. The receiving unit includes a power supply switch configured to switch a connection between a voltage source and the power source line, a power source direction notification switch configured to switch a connection between the power source line and the second line, and a second control circuit, and the transmitting unit including a power source circuit configured to convert a voltage supplied from a power source to a predetermined voltage, and to output the converted voltage, a changeover switch configured to switch a connection between the power source circuit and the power source line, a power reception notification switch configured to switch a connection between the power source line and the second line, and a first control circuit. The first control circuit is configured to send an inquiry about the presence/absence of a power supply function to the second control circuit using the first line, to turn on the changeover switch and turn off the power reception notification switch when a response indicating the presence of the power supply function is received, and to send a power supply request to the second control circuit using the first line. The second control circuit is configured to turn on the power supply switch and turn off the power source direction notification switch when the power supply request is received from the first control circuit, and to continue power supply during a first level period of a potential of the second line.

A power supply circuit according to an embodiment will be described hereinafter with reference to the drawings.

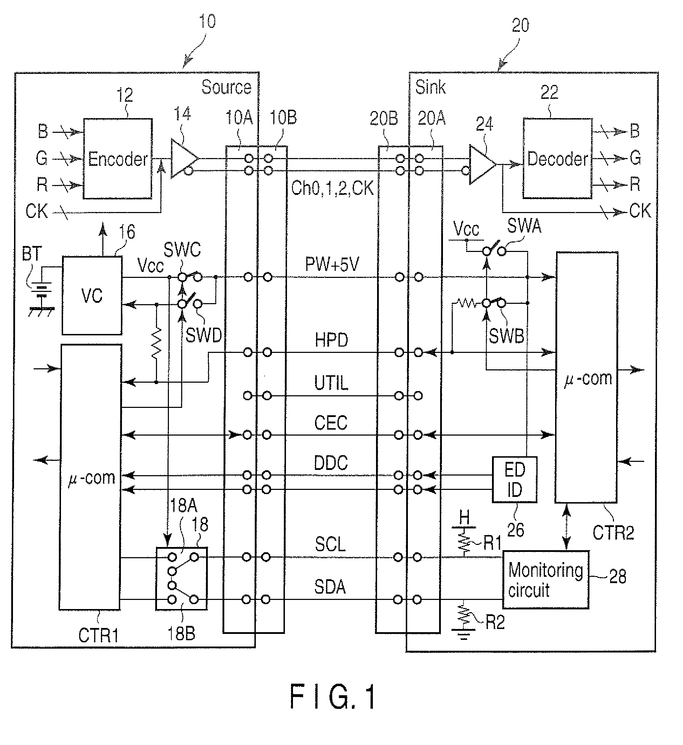

FIG. 1 is a circuit diagram for explaining an arrangement example of a power supply circuit according to this embodiment.

The power supply circuit includes a first communication function (for example, the HDMI function) of transmitting video and audio signals mainly by the transition minimized differential signaling (TMDS) method, a second communication function (for example, the HDMI-CEC function) of mutually transmitting signals using a party line, and a power supply line.

The power supply circuit includes a transmitting unit (source) 10, receiving unit (sink) 20, and a plurality of signal lines used to transmit a video signal, control signals, and the like between the source 10 and sink 20.

The source 10 and sink 20 are connected via a connection unit (for example, an HDMI cable or I²G communication line). The plurality of signal lines include, for example, a video signal transmission line, power supply line (PW+5V), HPD line, UTIL line, CEC line, DDC line, SCL line, and SDA line.

Two ends of each of the plurality of signal lines are connected to connectors 10B and 20B. The connector 10B is attached to a receptor 10A of the source 10 to connect the plurality of signal lines to the source 10. The connector 20B is attached to a receptor 20A of the sink 20 to connect the plurality of signal lines to the sink 20.

The source 10 is mounted in, for example, a video signal transmitting apparatus, and includes an encoder 12 which encodes a video signal, a buffer 14 which outputs a signal output from the encoder 12 by differential signaling, a power source circuit 16, a control circuit CTR1, a power cutoff switch SWC, a power reception notification switch SWD, a switch circuit 18, and the receptor 10A.

Video signals R, G, and B are input to the encoder 12. The encoder 12 encodes the input video signals R, G, and B, and outputs the encoded video signals as a serial signal to the buffer 14 connected to the output of the encoder 12.

The encoded video signal and a clock signal CK are input to the buffer 14. The buffer 14 outputs, by differential signaling, the encoded video signal and a signal obtained by inverting the encoded video signal onto the video signal transmission line in synchronism with the clock signal CK.

The power source circuit 16 is configured to convert a voltage supplied from a battery BT as needed to output a voltage Vcc, and to charge the battery BT by supplied electric power. Voltage Vcc is supplied to an input/output (I/O) port of the receptor 10A of the source 10 and the switch circuit 18. The source 10 can be mounted in an electronic device which charges the battery BT and can be used as a portable device. Note that the source 10 may be mounted in an electronic device which is used by connecting an external power source (AC adapter).

The power cutoff switch SWC is arranged in an output line from the power source circuit 16 to one terminal of the receptor 10A. The operation of the power cutoff switch SWC is controlled by control circuit CTR1.

The power reception notification switch SWD is arranged in an input line from one terminal of the receptor 10A to the power source circuit 16. The operation of the power reception notification switch SWD is controlled by control circuit CTR1.

The switch circuit 18 includes analog switches 18A and 18B which are configured to short-circuit a terminal connected to the connection line SCL of the receptor 10A and a terminal connected to the connection line SDA of the receptor 10A. The switch circuit 18 is supplied with voltage Vcc from the power source circuit 16. The analog switches 18A and 18B short-circuit the connection lines to the receptor 10A when voltage Vcc is not supplied.

Control circuit CTR1 is configured to control the operations of the encoder 12, power source circuit 16, power cutoff switch SWC, and power reception notification switch SWD.

The power source circuit 16 is connected to the power supply line (PW+5V) in the HDMI cable via the power cutoff switch SWC. In the source 10, the power supply line (PW+5V) is connected to the HPD line and an I/O port of control circuit CTR1 via the power reception notification switch SWD and a resistor.

The sink 20 is mounted in, for example, a video receiving apparatus, and includes a decoder 22, a buffer 24 which outputs an input signal to the decoder 22, a power supply switch SWA, a power source direction notification switch SWB, a control circuit CTR2, a ROM as a recording unit 26, and a monitoring circuit 28.

The buffer 24 receives the encoded video signal from the video signal transmission line, and outputs the encoded video signal and a clock signal. The encoded video signal is input to the decoder 22. The decoder 22 decodes the encoded video signal to parallelly output decoded signals.

The power supply switch SWA is configured to switch a connection between the power source voltage supply line (PW+5V) and a voltage source of a voltage Vcc. The operation of the power supply switch SWA is controlled by control circuit CTR2. Between the power source voltage supply line (PW+5V) and HPD line, a resistor specified by the HDMI standard is connected via the power source direction notification switch SWB.

In the sink 20, voltage Vcc is connected to the power supply line (PW+5V) via the power supply switch SWA, and power supply to the source 10 is controlled by switching the power supply switch SWA.

The recording unit 26 records addresses (physical addresses) indicating locations in the entire system. The source 10 and sink 20 acquire the addresses by accessing the recording unit 26, and confirm the self locations in the HDMI system.

The clock signal (SCL) line and data signal (SDA) line are connected to an I/O port of the monitoring circuit 28. A pull-up resistor R1 (4.7 kΩ) is connected to the SCL line. A pull-down resistor R2 (4.7 kΩ) is connected to the SDA line. The monitoring circuit 28 monitors potentials of the SCL line and SDA line.

Control circuit CTR2 controls the operations of the decoder 22, power supply switch SWA, power source direction notification switch SWB, recording unit 26, and monitoring circuit 28. The HPD line is connected to an I/O port of control circuit CTR2, and control circuit CTR2 monitors a potential of the HPD line.

Note that the utility (UTIL) line in the HDMI cable shown in FIG. 1 may be connected to a circuit which is not shown.

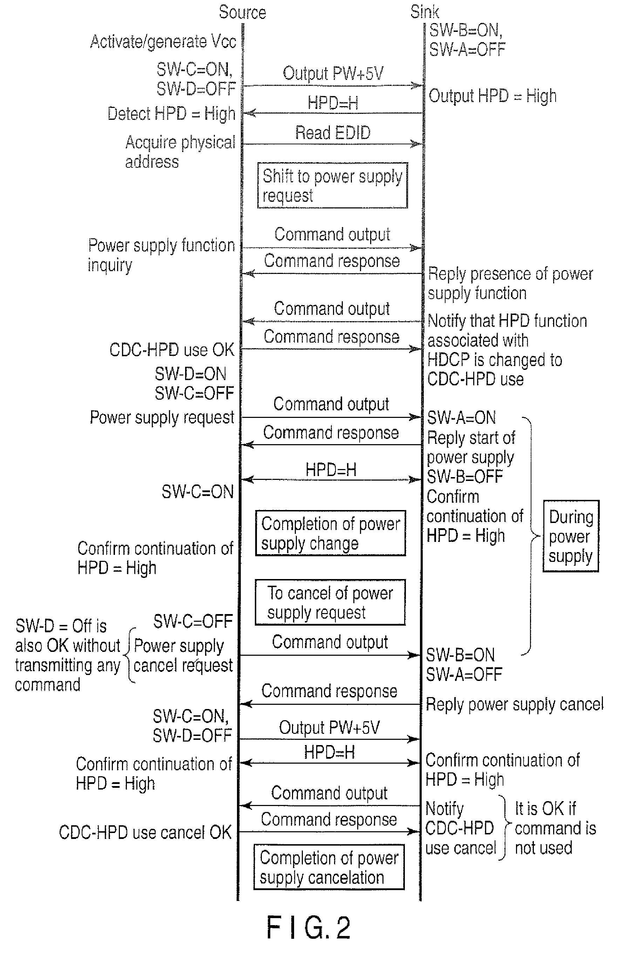

FIG. 2 is a timing chart for explaining an example of the operation for supplying electric power from the sink 20 to the source 10 in the power supply circuit.

Control circuit CTR2 of the sink 20 turns on the power source direction notification switch SWB and turns off the power supply switch SWA. Control circuit CTR1 of the source 10 turns on the power cutoff switch SWC and turns off the power reception notification switch SWD.

When the source 10 and sink 20 are connected via the connection unit, and the source 10 is activated, the power source circuit 16 operates to supply a power source voltage onto the power source voltage supply line (PW+5V). At this time, a current flows from the power source voltage supply line (PW+5V) to the I/O port of control circuit CTR2 via the power source direction notification switch SWB, resistor, and HPD line, and the potential of the HPD line goes high. In this manner, the same environment as that of a normal HDMI cable is initially set.

In order to send a power supply request from the source 10 to the sink 20, the source 10 sends a power supply function inquiry to the sink 20 using the CEC line. At this time, the inquiry command may include not only the presence/absence of the power supply function but also a current amount requested by the source 10. When the sink 20 has the power supply function, it returns a response to the inquiry from the source 10. As the response, an available supply current amount of the sink 20 may be added to a reply command. An inquiry command system on the CEC line uses extended Capability Discovery and Control (CDC) specified by, for example, HDMI 1.4.

Next, the sink 20 notifies the source 10 that a communication of a function associated with HDCP is substituted by a CDC-HPD command specified by HDMI 1.4. The source 10 returns a CDC-HPD communication OK response to the sink 20.

Then, control circuit CTR1 of the source 10 turns on the power reception notification switch SWD and turns off the power cutoff switch SWC. The power source circuit 16 makes a power reception preparation, and sends a power supply start request to control circuit CTR2 of the sink 20 using a CDC command. Control circuit CTR2 of the sink 20 turns on the power supply switch SWA to start power supply, and turns off the power source direction notification switch SWB to notify control circuit CTR1 of the source 10 of the start of power supply.

Control circuit CTR1 of the source 10 receives the power supply start command, and turns on the power cutoff switch SWC to start power reception. That is, a power source voltage is supplied from the voltage source of voltage Vcc of the sink 20 to control circuit CTR1 of the source 10 via a route of the power source voltage supply line (PW+5V), power reception notification switch SWD, and HPD line. During a period in which the high potential state of the HPD line is continued, the power supply from the sink 20 side is continued.

Next, a case will be described below wherein the power supply is canceled. Control circuit CTR1 of the source 10 turns off the power cutoff switch SWC to temporarily stop power reception from the power source voltage supply line (PW+5V).

Subsequently, control circuit CTR1 prepares to control the power source circuit 16 to generate voltage Vcc and to supply it to the power source voltage supply line (PW+5V), Subsequently, control circuit CTR1 outputs a power supply cancel CDC command. Upon reception of the power supply cancel command, control circuit CTR2 of the sink 20 turns on the power source direction notification switch SWB, and turns off the power supply switch SWA to notify the source 10 of the cancel of power supply. The source 10 turns on the power cutoff switch SWC to start to supply voltage Vcc to the power source voltage supply line (PW+5V).

Next, control circuit CTR2 of the sink 20 outputs a CDC-HPD use cancel command, and control circuit CTR1 of the source 10 returns a CDC use cancel OK response. When the power supply request is canceled, as described above, supply of the power source voltage Vcc from the sink 20 to the source 10 is stopped, and supply of the power source voltage Vcc from the source 10 to the sink 20 is started.

Note that the CDC-HPD use start and end commands in the above example may or may not be used.

Next, an operation example of a case in which voltage Vcc is not supplied from the source 10 when the source 10 and sink 20 are connected via the connection unit will be described below.

Control circuit CTR2 of the sink 20 controls the monitoring circuit 28 to monitor the potentials of the SCL line and SDA line to acquire the status of the source 10. When voltage Vcc is not output from the power source circuit 16, the SCL line and SDA line are electrically connected by the switch circuit 18. At this time, the monitoring circuit 28 detects that the SCL line is at high level (first level), and the SDA line is at low level (second level), and outputs a signal which notifies control circuit CTR2 that voltage Vcc is not supplied from the source 10. In this case, control circuit CTR2 of the sink 20 turns on the power supply switch SWA and turns off the power source direction notification switch SWB to supply voltage Vcc to the source 10.

When voltage Vcc is supplied from the source 10, the switch circuit 18 connects the SCL line and SDA line to control circuit CTR1 to supply a predetermined signal. When the monitoring circuit 28 detects that the SCL line is at high level, and the SDA line is at a predetermined potential (for example, 2.5 V), it outputs a signal which notifies control circuit CTR2 that voltage Vcc is supplied from the source 10. In this case, control circuit CTR2 of the sink 20 performs the power source voltage supply operation shown in FIG. 2.

When the source 10 is not electrically connected to the I/O port of the sink 20 to which the SCL line and SDA line are connected, the monitoring circuit 28 detects that the I/O port is open, and outputs a signal which notifies control circuit CTR2 that the source 10 is not connected.

As described above, by arranging the switch circuit 18 and monitoring circuit 28, for example, in a state in which the battery BT cannot be discharged, and the source 10 cannot supply voltage Vcc, the source 10 is activated by supplying voltage Vcc from the sink 20, thus allowing signal transmission processing.

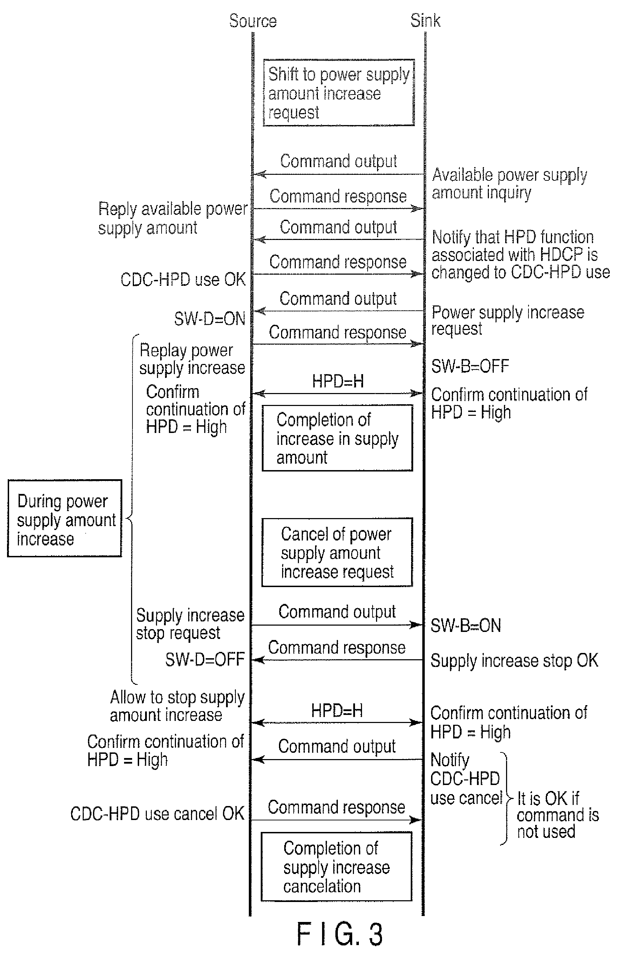

A case will be described below wherein a power source voltage supply amount from the sink 20 to the source 10 is increased. FIG. 3 is a timing chart for explaining an operation example in which the power source voltage supply amount is increased during the power source voltage supply from the sink 20 to the source 10.

This example assumes a device such as an HUMI selector (including the source 10 and sink 20) which connects between a stationary transmitting device such as a set-top box or recorder and a stationary device such as a digital television receiver. Such a device is used via an external power source (AC adapter) which comes with this device. However, by applying this embodiment, the need for the external power source can be obviated.

Control circuit CTR2 of the sink 20 sends, to control circuit CTR1 of the source 10, an inquiry as to whether or not it is possible to increase the power supply amount using a CDC command. Control circuit CTR1 of the source 10 returns a response indicating that a power supply amount increase function is available to control circuit CTR2 of the sink 20. To the inquiry and response at that time, information indicating an available supply amount may be appended.

Control circuit CTR2 of the sink 20 notifies control circuit CTR1 of the source 10 that a communication of a function associated with HDCP is substituted by a CDC-HPD command specified by HDMI 1.4. Control circuit CTRI of the source 10 returns a response indicating that a communication using a CDC-HPD command is OK to control circuit CTR2 of the sink 20.

Control circuit CTR2 of the sink 20 sends a power supply amount increase request using a CDC-HPD command. Control circuit CTR1 of the source 10 turns on the power reception notification switch SWD, then increases a power supply amount, and returns a power supply amount increase completion response to control circuit CTR2 of the sink 20 using a CDC-HPD command.

Next, control circuit CTR2 of the sink 20 turns off the power source direction notification switch SWB. Control circuit CTR1 of the source 10 and control circuit CTR2 of the sink 20 continue to detect the HPD line, and a power supply amount from the source 10 is increased during a period in which the high potential state of the HPD line is continued.

Subsequently, an example of a power supply amount increase stop operation will be described below. The source 10 outputs a power supply increase function stop request using a CDC-HPD command. Control circuit CTR2 of the sink 20 turns on the power source direction notification switch SWB, and then returns a power supply increase stop OK response to control circuit CTR1 of the source 10.

Next, after it is confirmed that the high potential state of the HPD line is continued, control circuit CTR2 of the sink 20 outputs a CDC-HPD use cancel command to control circuit CTR1 of the source 10. Control circuit CTR1 of the source 10 returns a CDC-HPD use cancel OK response. As described above, the power supply amount increase stop operation is complete.

In the above example, the source 10 outputs an increase stop request command. Conversely, control circuit CTR2 of the sink 20 may output a cancel command.

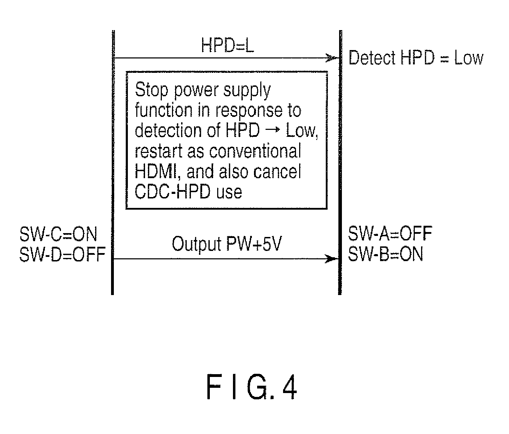

FIG. 4 shows an example of a cancel operation which is applicable to the power source voltage supply operation and power source voltage increase operation.

Control circuit CTR1 of the source 10 and control circuit CTR2 of the sink 20 continue to detect the potential of the HPD line after the power supply start operation or power supply amount increase start operation from the source 10. When the potential of the HPD line changes from high level (first level) to low level (second level), the source 10 and sink 20 immediately cancel the operation associated with power supply, turn off the power supply switch SWA, turn on power source direction notification switch SWB, turn on the power cutoff switch SWC, and turn off the power reception notification switch SWD, thereby supplying voltage Vcc from the power source circuit 16 onto the power source voltage supply line (PW+5V).

As described above, according to the power supply circuit of this embodiment, electric power can be supplied to a connection device (transmitting device side) via the connection unit such as the HDMI cable, and signal transmission does not depend on the operation mode (battery operation) of the connection device. Even when no signal transmission is made from the connection device, the battery can be charged by only connecting, for example, the HDMI cable, thus improving the user's convenience. At the time of the signal transmission operation from the transmitting device, whether or not the HDMI cable is disconnected can be surely determined.

That is, according to the power supply circuit of this embodiment, a power supply circuit which allows the sink to supply electric power to the source, and is not restricted by the power supply circumstances of the receiving device can be provided.

In the aforementioned power supply circuit, an HDMI communication and HDMI-CEC communication are used to search and control the power supply function. For example, one or both of the HPD line and UTIL line may be used. Even in such a case, the same effects as in the power supply circuit according to this embodiment can be obtained.

## Claims

1. A power supply circuit **characterized by** comprising a transmitting unit (10), a receiving unit (20), and a connection unit which comprises a first line configured to transmit a control signal between the transmitting unit and the receiving unit, a power source line configured to transmit a power source voltage, and a second line configured to transmit a power reception status,
the receiving unit (20) comprising a power supply switch (SWA) configured to switch a connection between a voltage source and the power source line, a power source direction notification switch (SWB) configured to switch a connection between the power source line and the second line, and a second control circuit (CTR2), and
the transmitting unit (10) comprising a power source circuit (16) configured to convert a voltage supplied from a power source to a predetermined voltage, and to output the converted voltage, a changeover switch (SWC) configured to switch a connection between the power source circuit and the power source line, a power reception notification switch (SWD) configured to switch a connection between the power source line and the second line, and a first control circuit (CTR1),
wherein the first control circuit (CTR1) is configured to send an inquiry about the presence/absence of a power supply function to the second control circuit (CTR2) using the first line, to turn on the changeover switch (SWC) and turn off the power reception notification switch (SWD) when a response indicating the presence of the power supply function is received, and to send a power supply request to the second control circuit (CTR2) using the first line, and
the second control circuit (CTR2) is configured to turn on the power supply switch (SWA) and turn off the power source direction notification switch (SWB) when the power supply request is received from the first control circuit (CTR1), and to continue power supply during a first level period of a potential of the second line.

2. The circuit of claim 1, **characterized in that** the connection unit further comprises a third line and a fourth line, which are used to detect a status of the transmitting unit (10),
the receiving unit (20) further comprises a monitoring circuit (28) to which the third line and the fourth line are connected, a pull-up resistor (R1) connected to the third line, and a pull-down resistor (R2) connected to the fourth line,
the transmitting unit further comprises a switch circuit (18) configured to short-circuit the third line and the fourth line when the power source circuit outputs a predetermined voltage,
the monitoring circuit (28) is configured to monitor potentials of the third line and the fourth line, and to notify the second control circuit (CTR2) that it is impossible to supply a power source voltage from the transmitting unit (10) when the potential of the third line is at first level and the potential of the fourth line is at second level, and
The second control circuit (CTR2) is configured to turn on the power supply switch (SWA) and turn off the power source direction notification switch (SWB) when it is impossible to supply the power source voltage from the transmitting unit (10), and to continue power supply during a first level period of the potential of the second line.

3. The circuit of claim 1, **characterized in that** the second line is at least one of an HPD line and a UTIL line specified by an HDMI standard.

4. The circuit of claim 1, **characterized in that** the first line is a CEC line specified by an HUMI standard, and
the first control circuit (CTR1) and the second control circuit (CTR2) transmit the inquiry about the presence/absence of the power supply function, the response indicating the presence of the power supply function, and the power supply request from the first control circuit (CTR1) to the second control circuit (CTR2) using CDC-HPD commands.
